# EUROPÄISCHE PATENTANMELDUNG

(11) **EP 3 909 814 A1**
(43) Veröffentlichungstag der Anmeldung: **17.11.2021**
(21) Anmeldenummer: 21172922.3
(22) Anmeldetag: 10.05.2021
(51) Int. Cl.: B60R 19/56

(54) **UNTERFAHRSCHUTZ FÜR EIN NUTZFAHRZEUG**

(30) Priorität: 12.05.2020 DE 202020102653 U
(71) Anmelder: WAP Fahrzeugtechnik GmbH, 33178 Borchen (DE)
(72) Erfinder: MORFELD, Alfons, 33129 Delbrück (DE)
(74) Vertreter: Dantz, Jan Henning

(57) **Zusammenfassung**

Ein Unterfahrschutz für ein Nutzfahrzeug, mit mindestens einem fahrzeugseitig festlegbaren Anschlussteil (3), einem daran angeschlossenen, einen Tragholm (2) aufweisenden Tragelement (1), an dem endseitig ein Prallbalken (5) befestigt ist, wobei am Tragholm (2) ein um eine parallel zum Prallbalken (5) verlaufende Schwenkachse verschwenkbarer, in unterschiedlichen Schwenkstellungen feststellbarer Lagerbock (4) vorgesehen ist, an dem der Prallbalken (5) befestigt ist.

## Beschreibung

Die Erfindung betrifft einen Unterfahrschutz für ein Nutzfahrzeug, mit mindestens einem fahrzeugseitig festlegbaren Anschlussteil sowie einem daran angeschlossenen, einen Tragholm aufweisenden Tragelement, an dem endseitig ein Prallbalken befestigt ist.

Ein solcher Unterfahrschutz kommt front- oder heckseitig am Nutzfahrzeug zum Einsatz, letzteres sowohl bei Lastkraftwagen wie auch bei von einem Zugfahrzeug gezogenen Anhängern.

Der Unterfahrschutz soll verhindern, dass bei einem Auffahrunfall das auffahrende Fahrzeug, insbesondere ein PKW, unter die Ladefläche des Nutzfahrzeuges geschoben wird, vor allem um Personenschäden zu vermeiden.

Gattungsgemäße Unterfahrschutze sind hinlänglich bekannt. Hierzu wird auf die DE 20 2016 015 495 A1 verwiesen, in der ein Unterfahrschutz offenbart ist, dessen Tragelemente sowohl starr mit dem Prallbalken wie auch mit den Anschlussteilen verbunden sind. Diese sind an fahrzeugseitigen Bestandteil eines Rahmens bildenden Trägern des Fahrzeugs befestigt.

Probleme können sich allerdings dadurch ergeben, dass der Abstand der Ladefläche bzw. der Träger zum Flur bei den Nutzfahrzeugen unterschiedlich sein kann.

Um den Prallbalken in einem gesetzlich vorgeschriebenen Abstand zum Flur positionieren zu können, muss daher, je nach Trägerabstand zum Flur ein angepasster Unterfahrschutz bereitgestellt werden, insbesondere durch entsprechende Modifizierung, d.h. Längenanpassung der Tragholme, was naturgemäß nur unter Inkaufnahme eines erheblichen Fertigungsaufwandes möglich ist, der einhergeht mit entsprechenden Fertigungskosten. Insofern sind die bekannten Unterfahrschutze im Wesentlichen Einzelfertigungen.

Der Erfindung liegt die Aufgabe zugrunde, einen Unterfahrschutz der gattungsgemäßen Art so weiterzuentwickeln, dass er kostengünstiger herstellbar ist und seine Verwendungsfähigkeit verbessert wird.

Diese Aufgabe wird durch einen Unterfahrschutz mit den Merkmalen des Anspruchs 1 gelöst.

Demnach weist das jeweilige Tragelement des Unterfahrschutzes einen Lagerbock auf, an dem der Prallbalken befestigt ist und der um eine parallel zum Prallbalken verlaufende Schwenkachse verschwenkbar ist.

Die Schwenkachse, um die der Lagerbock verschwenkbar ist, kann aus einem Rohrabschnitt bestehen, der an dem dem Prallbalken zugewandten Ende des Tragelements, d.h. des Tragholms befestigt ist.

Durch die Erfindung besteht nunmehr die Möglichkeit, unabhängig vom Flurabstand des fahrzeugseitigen Rahmens, an dem das Tragelement bzw. das Anschlussteil befestigt ist, den Prallbalken durch Verschwenken mittels des Lagerbocks so zu positionieren, dass der gesetzlich vorgeschriebene Abstand zum Flur eingehalten wird.

In Konsequenz bedeutet dies, dass der Unterfahrschutz gemäß der Erfindung konfektioniert lagermäßig vorgehalten werden kann, was naturgemäß eine einfachere und kostengünstigere Herstellung ermöglicht als dies bislang der Fall war.

Die Festlegung des Lagerbocks am Rohrabschnitt kann form- oder reibschlüssig erfolgen, letzteres durch Klemmung beispielsweise mittels Klemmschrauben.

Überdies kann bei Bedarf der Lagerbock mit dem Rohr nach einer exakten Einstellung durch Verstiften gegen Verdrehen gesichert werden.

Die Befestigung des Lagerbocks am Prallbalken, der im Übrigen in seinem Querschnitt mehreckig, rund oder unrund sein kann, erfolgt durch Verschrauben, beispielsweise auch durch U-förmige Bügel, sogenannte Brieden, die den Prallbalken umfassen.

Nach einem weiteren Gedanken der Erfindung weist das Anschlussteil und vorzugsweise auch das Tragelement jeweils ein Lochmuster auf, das es ermöglicht das Tragelement in unterschiedlichen Neigungspositionen, abhängig vom Flurabstand des fahrzeugseitigen Rahmens, insbesondere durch Verschrauben zu fixieren. Dabei wird der Lagerbock so verdreht, dass die horizontale Querachse des Rohrabschnitts ebenso wie die horizontale Querachse des Prallbalkens fluchten, wodurch eine Hebelwirkung beim Aufprall auf den Prallbalken minimiert wird.

Der Tragholm ist vorzugsweise als Profilelement ausgebildet und zwar im Querschnitt U- oder C-förmig und mit der dem Anschlussteil gegenüberliegenden offenen Seite, wodurch eine Befestigung des Tragelements am Anschlussteil erleichtert wird. Dabei sind der Tragholm und der Lagerbock als Blechformteil ausgebildet, was eine besonders preiswerte und einfache Fertigung ermöglicht.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: einen erfindungsgemäßen Unterfahrschutz in einer perspektivischen Ansicht
- Fig. 2: den Unterfahrschutz in einer Seitenansicht, gesehen in Richtung des Pfeiles II in Fig. 1
- Fig. 3: eine Einzelheit des Unterfahrschutzes in einer Vorderansicht
- Fig. 4: die Einzelheit nach Fig. 3 in einer geschnittenen Seitenansicht gemäß der Linie A-A.

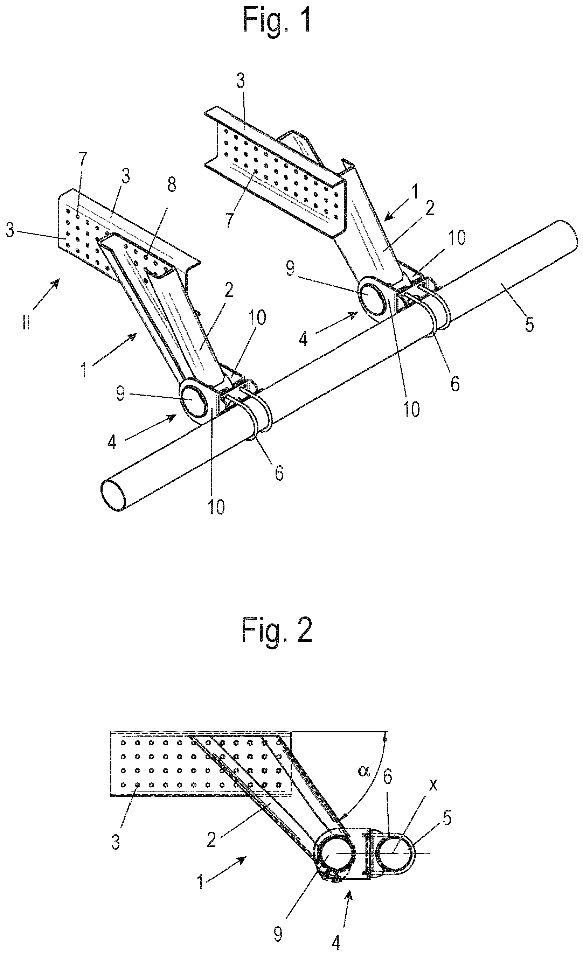

In den Figuren 1 und 2 ist ein Unterfahrschutz für ein Nutzfahrzeug abgebildet, mit zwei abständig zueinander angeordneten, an Trägern bzw. einem Rahmen eines nicht gezeigten Nutzfahrzeugs festlegbaren Anschlussteilen 3.

An den einander abgewandten Seiten der Anschlussteile 3 ist jeweils ein Tragelement 1 befestigt mit einem Tragholm 2 und einem daran schwenkbar gehaltenen Lagerbock 4, wobei dieser Lagerbock 4 an dem den Anschlussteil 3 abgewandten Ende des Tragholms 2 angeordnet ist.

Der Tragholm 2 ist als Blechformteil ausgebildet mit einem C-förmigen Querschnitt und sich in Längserstreckung trapezförmig zum Lagerbock 4 hin verjüngend. Dabei ist die offene Seite des Tragholms 2 dem Anschlussteil 3 gegenüberliegend. Wie insbesondere die Figur 2 sehr deutlich zeigt, ist das Tragelement 1 und damit der Tragholm 2 unter einem Winkel α zur Horizontalen X ausgerichtet.

Bei Anordnung des Unterfahrschutzes am Heck eines Fahrzeugs verläuft der Tragholm 2 entgegen der Fahrtrichtung schräg nach unten, hin zum Lagerbock 4.

Zur Einstellung unterschiedlicher Winkel a, um so den Abstand des Lagerbocks 4 zum Anschlussteil 3 zu verändern, ist zumindest am Anschlussteil 3, vorzugsweise auch am Tragholm 2 im Überdeckungsbereich mit dem Anschlussteil 3 jeweils ein Lochmuster 7, 8 vorgesehen, durch deren Löcher, je nach Schwenkwinkel α Schrauben geführt werden, um so das Tragelement 1 mit dem Anschlussteil 3 fest zu verbinden.

An den Lagerböcken 4 ist ein Prallbalken 5, der einen runden oder eckigen Querschnitt aufweisen kann, befestigt, wozu im Beispiel U-förmige Bügel 6 vorgesehen sind, die den Prallbalken 5 umgreifen und an den Lagerböcken 4 angeschlossen sind.

Diese Lagerböcke 4 bestehen aus zwei L-förmigen Winkeln 10, die auf einem eine Schwenkachse bildenden Rohrabschnitt 9 des Tragholms 2 verschwenkbar gelagert sind, wobei dieser Rohrabschnitt 9 beidseitig über die Tragholme 2 hinausragen, auf die jeweils einer der Winkel 10 des Lagerbocks 4 aufgeschoben ist.

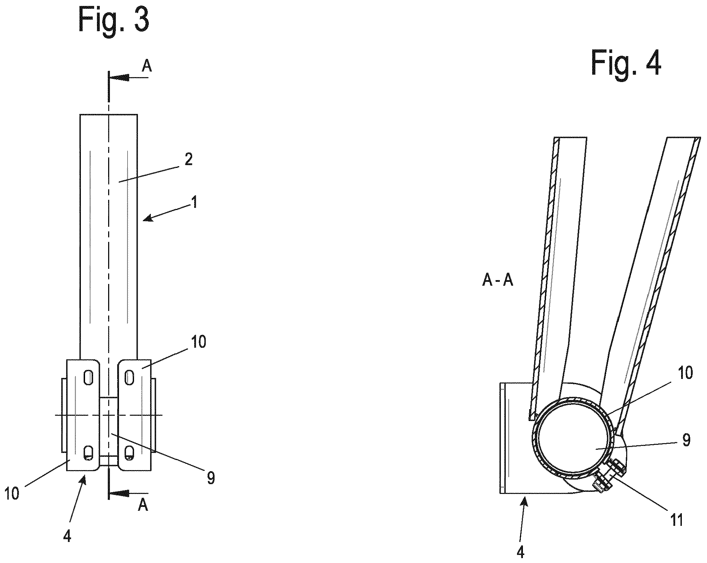

Erfindungsgemäß ist der Lagerbock 4 in der jeweiligen Schwenkstellung festsetzbar, beispielsweise durch Klemmen mittels einer Klemmschraube 11, wie sie besonders deutlich in der Figur 4 zu erkennen ist. Selbstverständlich sind auch andere Befestigungsmöglichkeiten denkbar, sowohl form- wie auch reibschlüssig, wobei die Verschwenkung bevorzugt stufenlos, alternativ jedoch auch in Stufen möglich ist.

Je nach Schwenkwinkel α können der Lagerbock 4 und damit der Prallbalken 5 so verschwenkt werden, dass die Querachsen des Prallbalkens 5 und des Rohrabschnitts 9 in der parallel zum Anschlussteil 3 verlaufenden Horizontalen X fluchten.

Neben dem U-förmigen Bügel 6 zur Befestigung des Prallbalkens 5 an den Lagerböcken 4, sind auch andere Befestigungsarten denkbar, je nach Querschnittskontur des Prallbalkens 5.

### Bezugszeichenliste

1 Tragelement
2 Tragholm
3 Anschlussteil
4 Lagerbock
5 Prallbalken
6 Bügel
7 Lochmuster
8 Lochmuster
9 Rohrabschnitt
10 Winkel
11 Klemmschraube

## Patentansprüche

1. Unterfahrschutz für ein Nutzfahrzeug, mit mindestens einem fahrzeugseitig festlegbaren Anschlussteil (3), einem daran angeschlossenen, einen Tragholm (2) aufweisenden Tragelement (1), an dem endseitig ein Prallbalken (5) befestigt ist, **dadurch gekennzeichnet, dass** am Tragholm (2) ein um eine parallel zum Prallbalken (5) verlaufende Schwenkachse verschwenkbarer, in unterschiedlichen Schwenkstellungen feststellbarer Lagerbock (4) vorgesehen ist, an dem der Prallbalken (5) befestigt ist.

2. Unterfahrschutz nach Anspruch 1, **dadurch gekennzeichnet, dass** der Lagerbock (4) in der jeweiligen Schwenkstellung kraft- oder formschlüssig am Tragelement (1) festgesetzt ist.

3. Unterfahrschutz nach Anspruch 1 oder 2, **dadurch gekennzeichnet, dass** an dem dem Anschlussteil (3) abgewandten Ende des Tragholms (2) ein sich parallel zum Prallbalken (5) erstreckender, die Schwenkachse bildender Rohrabschnitt (9) befestigt ist, der beidseitig über den Tragholm (2) vorsteht.

4. Unterfahrschutz nach einem der vorhergehenden Ansprüche, **dadurch gekennzeichnet, dass** der Lagerbock (4) an den gegenüber dem Tragholm (2) beidseitigen Überständen des Rohrabschnitts (9) gehalten ist.

5. Unterfahrschutz nach einem der vorhergehenden Ansprüche, **dadurch gekennzeichnet, dass** der Lagerbock (4) aus zwei L-förmigen Winkeln (10) besteht, von denen jeweils einer am überstehenden Rohrabschnitt (9) gelagert ist.

6. Unterfahrschutz nach einem der vorhergehenden Ansprüche, **dadurch gekennzeichnet, dass** der Lagerbock (4) in verschwenkter Stellung zusätzlich verstiftet ist.

7. Unterfahrschutz nach einem der vorhergehenden Ansprüche, **dadurch gekennzeichnet, dass** der Prallbalken (5) und der Rohrabschnitt (9) in jeder Schwenkstellung in einer parallel zum Anschlussteil (3) verlaufenden Horizontalen (X) fluchten.

8. Unterfahrschutz nach einem der vorhergehenden Ansprüche, **dadurch gekennzeichnet, dass** das Anschlussteil (3) und der Tragholm (2) jeweils ein Lochmuster (7, 8) aufweisen, durch die in jeder Schwenkstellung des Tragholms (2) mindestens zwei Verbindungsschrauben geführt sind.

9. Unterfahrschutz nach einem der vorhergehenden Ansprüche, **dadurch gekennzeichnet, dass** der Tragholm (2) und der Lagerbock (4) als Blechformteile ausgebildet sind.

10. Unterfahrschutz nach einem der vorhergehenden Ansprüche, **dadurch gekennzeichnet, dass** der Prallbalken (5) und der Lagerbock (4) form- oder kraftschlüssig miteinander verbunden sind.
